# DEMANDE DE BREVET EUROPEEN

(11) **EP 1 223 003 A1**
(43) Date de publication de la demande: **17.07.2002**
(21) Numéro de dépôt: 02290044.3
(22) Date de dépôt: 09.01.2002
(51) Int. Cl.: B23Q 7/14, B23Q 41/02

(54) **Installation pour la circulation de palettes porte-pièces et palette pour cette installation**

(30) Priorité: 15.01.2001 FR 0100471
(71) Demandeur: Prodel Holding, 60170 Carlepont (FR)
(72) Inventeur: Prodel, Jacques, 60170 Carlepont (FR)
(74) Mandataire: Bezault, Jean

(57) **Abrégé**

Une installation comprend des palettes porte-pièces (10) de forme générale rectangulaire qui se déplacent dans des modules élémentaires(46) sous l'action de frottement d'au moins un brin d'entraînement (50), le déplacement des palettes s'effectuant par l'intermédiaire de moyens de roulement (32) équipant la palette et roulant sur les fonds respectifs des modules. La palette (10) comprend un corps (12) sous lequel sont montées des roues libres (26) disposées horizontalement pour assurer le guidage et/ou l'entraînement de la palette, chaque module (46) comprend au moins un rail de guidage (62) définissant une voie de circulation de forme choisie et réalisé en un matériau élastiquement déformable, de sorte que, pendant le déplacement de la palette sur un module, le rail de guidage (62) exerce une force de rappel élastique sur au moins une roue libre (26) de la palette pour solliciter au moins une partie d'entraînement (18) de la palette en appui élastique contre le brin d'entraînement du module.

## Description

L'invention se rapporte aux installations pour la circulation de palettes porte-pièces.

Elle concerne plus particulièrement une installation pour la circulation de palettes porte-pièces de forme générale rectangulaire se déplaçant dans des modules élémentaires, sous l'action de frottement d'au moins un brin d'entraînement, le déplacement des palettes s'effectuant par l'intermédiaire de moyens de roulement équipant la palette et roulant sur les fonds respectifs des modules.

On connaît déjà des installations de ce type, appelées aussi "ateliers flexibles", dans lesquelles les modules peuvent accueillir des postes de travail, et/ou offrir des fonctions de circulation pure.

Habituellement, chacun des modules comprend au moins un brin d'entraînement, tel que, par exemple, une courroie sans fin, qui assure le déplacement d'une palette à l'intérieur du module, et du module à un autre.

Ces différents modules définissent des voies de circulation de forme choisie, généralement rectiligne ou curviligne, éventuellement avec une voie de dérivation.

De telles installations permettent de déplacer une palette entre différents postes de travail afin d'effectuer une succession d'opérations, par exemple d'assemblage et/ou d'usinage, sur les pièces que portent les palettes. Ces installations permettent ainsi d'assurer une production de pièces par une succession d'opérations effectuées manuellement et/ou automatiquement sur les postes de travail.

Une installation connue de ce type est décrite dans le brevet français n° 85 16095, publié sous le numéro 2 589 134. Dans cette installation connue, l'entraînement des palettes s'effectue par coopération d'un brin d'entraînement avec un organe de frottement faisant partie de la palette et appuyé à pression élastique contre le brin.

De telles installations ont donné parfaite satisfaction jusqu'à présent, compte tenu des vitesses et accélérations relativement faibles assumées par les palettes.

Cependant, avec les progrès de la robotique, les palettes doivent se déplacer à des vitesses de plus en plus élevées, en étant soumises également à des accélérations de plus en plus fortes.

Par ailleurs, compte tenu des cadences de plus en plus élevées requises pour la production de pièces, il est impératif que les palettes puissent être immobilisées dans une position précise au niveau d'un poste de travail, et cela avec un très faible intervalle de temps, pour être ensuite libérées et continuer leur déplacement vers d'autres postes de travail.

Il est nécessaire que la reprise du mouvement de la palette sous l'action du brin d'entraînement, à la fin de son immobilisation, s'effectue dans des conditions optimales en dépit des frottements.

Il est impératif, notamment, que cette reprise de mouvement n'engendre pas d'accélérations, de chocs, ni de vibrations trop forts, qui seraient susceptibles de perturber le mouvement de la palette et/ou de déplacer la ou les pièce(s) qu'elle supporte.

Se pose également le problème d'assurer un entraînement des palettes par frottement du brin d'entraînement, l'immobilisation de la palette alors que le brin d'entraînement poursuit son mouvement, puis la reprise du mouvement de la palette dans des conditions optimales de fonctionnement, et cela malgré la vitesse élevée assumée par le brin.

L'invention a précisément pour but de fournir une installation de ce type qui permet d'assurer une circulation des palettes dans des conditions optimales de fonctionnement et de sécurité, et cela même à des vitesses élevées (typiquement de l'ordre de quelques mètres par seconde) comme exigé par les progrès actuels de la robotique.

C'est encore un but de l'invention de procurer une telle installation dans laquelle les problèmes posés par la circulation à vitesse élevée des palettes, puis leur immobilisation et leur remise en circulation, sont résolus de manière simple et efficace.

C'est encore un but de l'invention de procurer une telle installation dans laquelle l'immobilisation ou l'indexage d'une palette en mouvement, peut être obtenu sans difficulté, même dans le cas où la palette porte une lourde charge et circule à vitesse élevée.

C'est aussi un but de l'invention de procurer une telle installation dans laquelle une immobilisation précise d'une palette peut être obtenue par des moyens simples, en vue du traitement de la ou des pièces qu'elle porte.

L'invention s'applique aux installations dans lesquelles les modules assurent un déplacement sur une voie de circulation de forme choisie avec ou non conservation de l'orientation spatiale de la palette.

Elle a aussi pour but de procurer une palette propre à faire partie d'une telle installation.

L'invention propose à cet effet une installation du type défini précédemment, dans laquelle la palette comprend un corps sous lequel sont montées des roues libres disposées horizontalement pour assurer le guidage et/ou l'entraînement de la palette, dans laquelle chaque module comprend au moins un rail de guidage définissant une voie de circulation de forme choisie et réalisé en un matériau élastiquement déformable, et dans lequel, pendant le déplacement de la palette sur le module, le rail de guidage exerce une force de rappel élastique sur au moins une roue libre de la palette, de manière à solliciter au moins une partie d'entraînement de la palette en appui élastique contre le brin d'entraînement du module.

Le rail de guidage, par ses propriété élastiques, exerce une fonction de ressort qui sollicite la partie d'entraînement de la palette contre le brin d'entraînement. Cette fonction de ressort du rail de guidage peut être renforcée ou tout simplement remplacée par le rajout d'un ou plusieurs volets mécaniques, par exemple montés sur ressort, sur la partie d'entraînement de la palette pour améliorer la traction.

Ainsi, le déplacement de la palette dans un module ou d'un module à un autre s'effectue par frottement d'une partie d'entraînement de la palette contre un brin d'entraînement, sous l'effet d'une force de rappel élastique exercée par un rail de guidage sur au moins une roue libre de la palette.

Comme on le verra plus loin, ces roues libres, que l'on peut aussi appeler des roulements, contribuent au guidage et/ou à l'entraînement de la palette pendant son déplacement.

Une caractéristique importante réside dans le fait que la force de rappel élastique, qui contribue au frottement de la palette avec le brin d'entraînement, est assurée par le rail de guidage qui assure de ce fait une fonction combinée de guidage et de rappel élastique.

On évite ainsi d'avoir recours à un organe de frottement spécifique, faisant partie de la palette et appuyé à pression élastique contre le brin, comme c'était le cas dans l'installation du brevet français précité.

L'installation de l'invention peut comprendre différents types de modules.

En particulier, il peut s'agir d'un module qui définit une voie de circulation rectiligne et qui comprend un brin d'entraînement rectiligne, ainsi qu'un rail de guidage rectiligne, parallèles entre eux, la partie d'entraînement de la palette étant constituée par un flanc de la palette, tandis que la ou les roue(s) libre(s) de la palette en appui contre le rail de guidage rectiligne est(sont) situé(s) à proximité d'un flanc opposé de la palette.

Ainsi, dans ce cas, la partie d'entraînement de la palette est constituée par un flanc de celle-ci.

Le module peut aussi définir une voie de circulation curviligne et comprendre un brin d'entraînement curviligne et un rail de guidage curviligne, disposés à distance constante, la partie d'entraînement de la palette étant constituée par une première région d'au moins une roue libre de la palette qui possède une seconde région située à l'opposé de la première région et venant en appui contre le rail de guidage en arc de cercle.

En ce cas, l'entraînement et le guidage de la palette sont assurés par au moins une roue libre qui est sollicitée en appui contre le brin d'entraînement, par l'intermédiaire du rail de guidage.

Le module peut aussi définir une voie principale de circulation rectiligne ayant un brin principal d'entraînement rectiligne, une voie secondaire de circulation rectiligne ayant un brin secondaire d'entraînement rectiligne, les voies principales et voies secondaires formant un embranchement à angle droit. En ce cas, le module est équipé d'un galet de déviation (avantageusement entraîneur), d'axe vertical, qui est déplaçable verticalement entre une position basse en laquelle il s'éclipse dans le fond du module pour que la palette se déplace suivant la voie principale, et une position haute en laquelle il fait saillie au-dessus du fond du module pour s'engager dans une rainure courbe de guidage aménagée dans l'un des coins de la palette, en sorte que la palette quitte la voie principale de circulation en échappant au contact du brin principal d'entraînement pour s'engager dans la voie secondaire de circulation et venir au contact du brin secondaire d'entraînement, sans modification de l'orientation spatiale de la palette.

Le galet de déviation peut également être accompagné d'un autre organe facilitant le mouvement en ligne droite, par exemple un autre galet pouvant être ériger en alternat avec le galet de déviation.

L'invention prévoit aussi des moyens d'indexation propres à immobiliser la palette en un emplacement choisi de la voie de circulation, ces moyens comprenant deux poussoirs propres à être actionnés par l'intermédiaire d'un capteur pour exercer une force latérale sur deux roues libres de la palette, du côté opposé au brin d'entraînement, provoquer le dégagement de la partie d'entraînement de la palette d'avec le brin d'entraînement, de préférence sans modifier la vitesse linéaire de celui-ci, et ainsi arrêter la palette.

Ces moyens d'indexation peuvent comprendre en outre un amortisseur escamotable propre à être actionné avec les poussoirs pour coopérer avec une butée de la palette.

Sous un autre aspect, l'invention concerne une palette propre à être utilisée dans une installation telle que définie précédemment.

Dans la description qui suit, faite seulement à titre d'exemple, on se réfère aux dessins annexés, sur lesquels :
- la Figure 1 est une vue de dessous d'une palette propre à faire partie d'une installation selon l'invention ;
- la Figure 2 est une vue en coupe selon la ligne II-II de la Figure 1 ;
- la Figure 3 est une vue de dessus d'un module à voie de circulation rectiligne propre à faire partie d'une installation selon l'invention ;
- la Figure 4 est une vue en coupe, à échelle agrandie, selon la ligne IV-IV de la Figure 3 ;
- la Figure 5 est une vue à échelle agrandie du détail V de la Figure 4 ;
- la Figure 6 est une vue à échelle agrandie du détail VI de la Figure 4 ;
- la Figure 7 est une vue de dessus d'un module à voie de circulation curviligne propre à faire partie d'une installation selon l'invention ;
- la Figure 8 est une vue en coupe, à échelle agrandie, selon la ligne VIII-VIII de la Figure 7 ;
- la Figure 9 est une vue partielle de dessus d'un module à voies de circulation perpendiculaires ;
- la Figure 10 est une vue partielle en coupe, à échelle agrandie, selon la ligne X-X de la Figure 9 ;
- la Figure 11 montre la coopération d'une rainure de guidage d'une palette avec un galet de déviation ;
- la Figure 12 est un graphe montrant les variations de la vitesse linéaire d'une palette en fonction de la position du galet de déviation dans la rainure de guidage lors d'un changement de direction d'une palette ;
- la Figure 13 est une vue de dessus de moyens d'indexation propres à immobiliser une palette ; et
- la Figure 14 est une vue de dessus d'une palette immobilisée par les moyens d'indexation de la Figure 13.

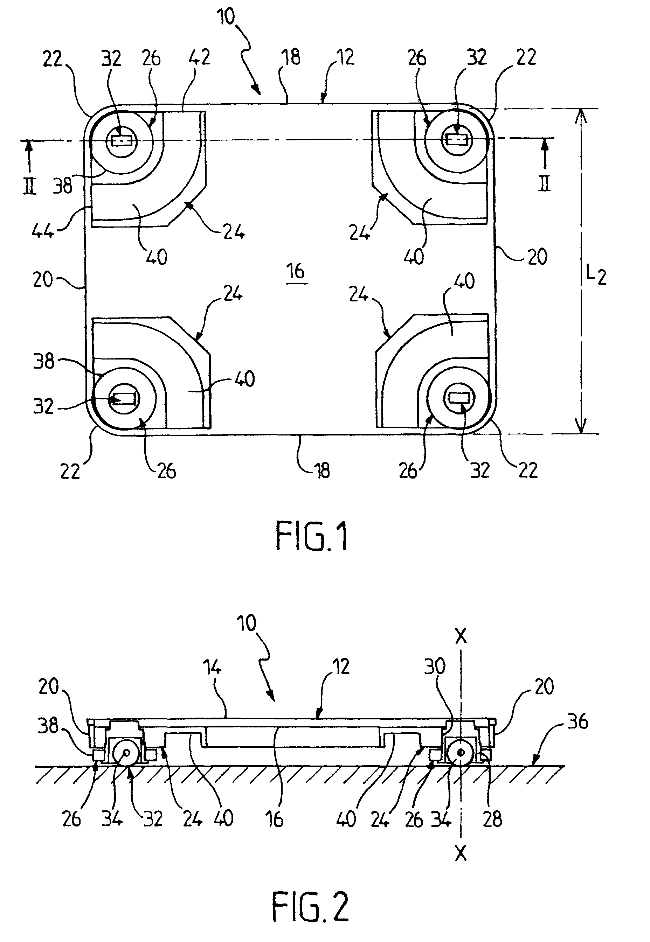

On se réfère d'abord aux Figures 1 et 2 pour décrire une palette 10 propre à faire partie d'une installation selon l'invention. Cette palette comprend un corps 12 de forme générale rectangulaire possédant une face supérieure 14 sur laquelle peut être déposée au moins une pièce (non représentée) à assembler ou usiner et une face inférieure 16. La palette est prévue pour se déplacer horizontalement ou sensiblement horizontalement. Le corps 12 de la palette est délimité latéralement par deux flancs ou côtés 18 s'étendant dans la direction longitudinale et deux autres flancs ou côtés 20 s'étendant dans la direction transversale, les flancs 18 étant plus longs que les flancs 20, dans l'exemple illustré, remarque étant faite que des palettes carrées sont envisageables.

Comme on peut le voir sur la Figure 2, la palette comporte quatre angles ou coins arrondis 22 qui raccordent les flancs 18 et 20 deux à deux. Les flancs 18 et 20 et les angles arrondis 22 de la palette offrent une bordure périphérique continue s'étendant perpendiculairement aux faces 14 et 16 du corps 12.

Le corps 12 comprend, sous sa face inférieure 16, quatre blocs 24 (encore appelés "pavés") prévus respectivement dans la région des quatre coins ou angles 22. Ces blocs sont rapportés au corps de palette, ou venus de matière avec celui-ci.

La palette 10 est équipée de quatre roues libres 26 disposées horizontalement et destinées à assurer le guidage et/ou l'entraînement de la palette, comme on le verra plus loin.

Les roues libres 26 sont portées chacune par un des blocs 24 disposés sous le corps 12 de la palette. Chacune des roues libres 26 est montée à rotation libre autour d'un axe X-X qui s'étend perpendiculairement aux faces 14 et 16 de la palette. Chacune des roues libres a la forme d'une couronne montée sur roulement, en particulier sur un roulement à billes (non représenté), et portée par un fût cylindrique 28 engagé dans un logement 30 du bloc 24 correspondant. A l'intérieur de chacune des roues libres en forme de couronne, c'est-à-dire ici à l'intérieur de chaque fût 28, est logé un moyen de roulement 32. Dans l'exemple, ce moyen de roulement est un galet auto-directeur monté à rotation libre autour d'un axe horizontal 34, lequel est porté par un pivot (non représenté) d'axe X-X qui n'intersecte pas l'axe 34. Chacun des galets auto-directeurs dépasse en dessous du fût 28 correspondant, pour constituer un moyen de roulement assurant le déplacement de la palette sur un fond 36 d'un module (non représenté).

Comme on peut le voir sur les Figures 1 et 2, chacune des roues libres 26 comprend une surface cylindrique d'appui 38, qui vient légèrement en retrait par rapport aux bords de la palette, comme constitués par les flancs 18 et 20 et les angles arrondis 22.

En outre, dans la face inférieure de chaque bloc 24 est aménagée une rainure courbe de guidage 40, sensiblement en forme d'arc de cercle, qui débouche sur deux bords 42 et 44 du bloc, au niveau des flancs 18 et 20 du corps de la palette, respectivement. La structure et la fonction des rainures de guidage 40 seront expliquées plus loin.

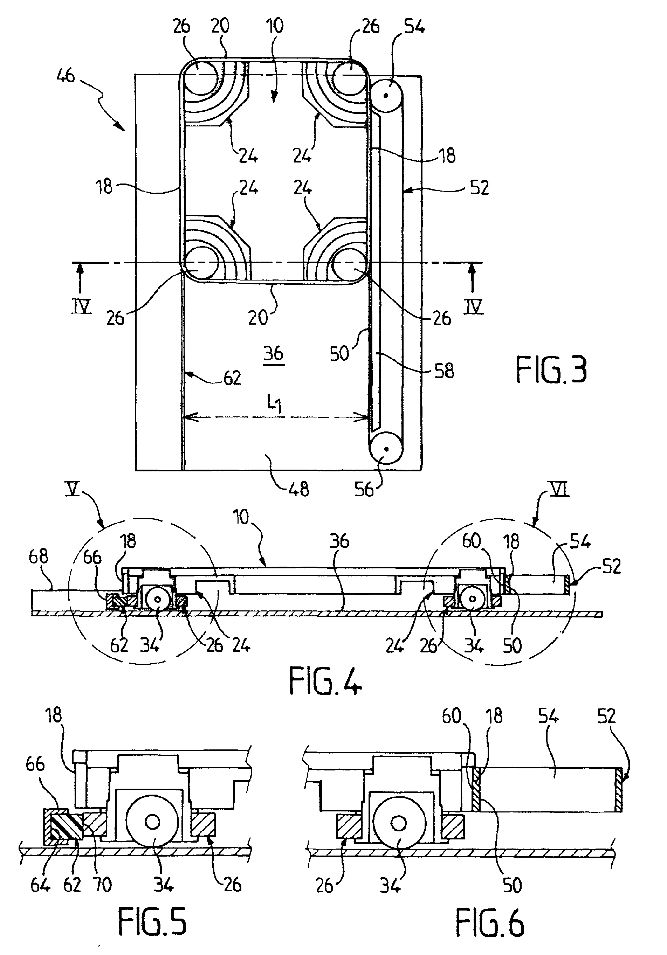

On se réfère maintenant à la Figure 3 qui montre un module élémentaire 46 propre à faire partie d'une installation selon l'invention. Ce module est destiné à être porté horizontalement par un bâti ou ossature (non représenté) et constitue ainsi un des tronçons de l'installation, étant entendu que ce module doit être raccordé à d'autres modules, identiques ou différents, faisant partie de l'installation, pour constituer des voies de circulation des palettes et/ou accueillir des postes de travail.

Dans l'exemple, le module 46 définit une voie de circulation rectiligne, et il comprend un bâti 48 portant un fond ou plancher 36 destiné à être placé horizontalement ou sensiblement horizontalement. Sur ce fond 36, peuvent rouler des palettes 10 telles que décrites précédemment qui se déplacent par l'intermédiaire de leurs moyens de roulement 32.

Le module 46 comprend un brin d'entraînement rectiligne 50 faisant partie d'une courroie sans fin 52 qui s'enroule autour de deux poulies de renvoi 54 et 56, dont l'une au moins est entraînée en rotation par un moteur approprié (non représenté). Le brin 50 prend appui, par sa face intérieure, sur un rail d'appui 58.

Comme on le voit sur la Figure 4 et sur le détail de la Figure 6, la courroie est une courroie de section plane, en sorte que le brin d'entraînement 50 offre une face d'appui 60 généralement plane et verticale, contre laquelle une partie de frottement de la palette est propre à venir en appui élastique. Dans le cas du module de la Figure 3, c'est un des flancs 18 du corps de la palette qui vient en appui à frottement contre la face d'appui 60 du brin. La courroie sans fin 52 est réalisée dans un matériau offrant un coefficient de frottement suffisamment élevé avec le matériau de la partie d'entraînement de la palette. A ce titre, on peut utiliser pour la courroie un matériau du type polyuréthanne ou caoutchouc.

Le module 46 comprend, en outre, un rail de guidage rectiligne 62 qui s'étend parallèlement au brin d'entraînement 50. Le rail de guidage 62 est réalisé dans un matériau élastique propre à fournir un rappel élastique de valeur choisie. A ce titre, on préfère utiliser un matériau élastique du type polyuréthanne ou caoutchouc, en particulier d'une dureté de 35 à 40 Shore. Dans l'exemple, le rail de guidage élastique 62 est une bande amovible engagée en force dans une gorge en U 64 définie par un profilé 66 qui fait partie d'un bord externe 68 du module 46 (Figures 4 et 5).

Dans l'exemple, la bande amovible possède une section transversale de forme générale rectangulaire, mais elle pourrait être d'une autre forme, par exemple semi-circulaire. Elle présente une face d'appui 70 sensiblement verticale, agencée de manière à solliciter un appui élastique contre deux des roues libres de la palette, les deux autres roues libres étant situées du côté du brin d'entraînement 50.

La face d'appui 70 du rail de guidage élastique 62 et la face d'appui 60 du brin 50 délimitent entre elles, au repos, un intervalle de valeur L1 qui est inférieur à la distance L2 (Figure 1) définie entre l'extérieur des roues libres situées près d'un des flancs 18 du corps de palette, d'une part, et le flanc 18 opposé, d'autre part.

Il en résulte que la palette doit être mise en place en force, en sorte que l'un de ses flancs 18 vienne en appui contre la face d'appui 60 du brin 50, tandis que les roues libres 26, situées près de l'autre flanc 18, puissent s'engager contre la face d'appui 70 du rail de guidage élastique.

Dans ces conditions, le rail de guidage élastique transmet une force de rappel élastique qui sollicite l'un des flancs 18 de la palette contre le brin d'entraînement 50.

De ce fait, l'action de frottement du brin d'entraînement s'effectue dans des conditions extrêmement simples, contre l'un des flancs du corps de palette, par l'intermédiaire de la force de rappel élastique produite par le rail de guidage.

Il est à noter que ce rail est réalisé simplement à partir d'une bande qui peut être coupée à la longueur voulue et qui peut être facilement mise en place et remplacée à la main en cas d'usure, sans nécessiter l'utilisation d'outils.

Dans une variante de réalisation non représentée, la fonction de rappel élastique (ou fonction de ressort) du rail de guidage 62 peut être renforcée ou tout simplement remplacée par le rajout d'un ou plusieurs volets mécaniques sur la partie d'entraînement de la palette, ce qui permet d'améliorer la traction.

Le montage du ou des volets de traction s'effectue ainsi avantageusement sur un flanc 18 du corps de la palette, avec interposition d'un ressort.

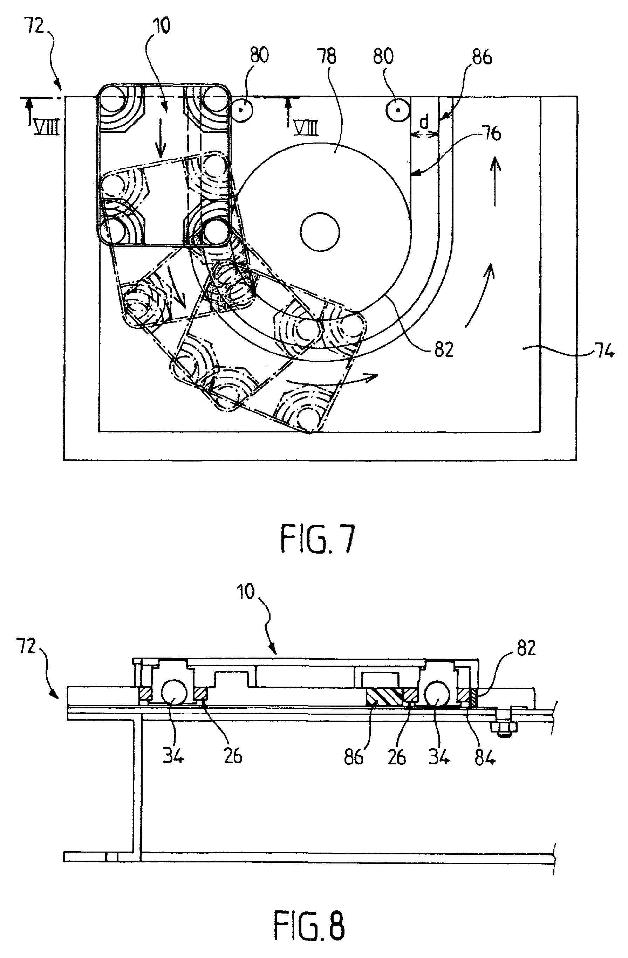

On se réfère maintenant aux Figures 7 et 8 qui montrent un module élémentaire 72 définissant une voie de circulation curviligne. Dans l'exemple, le module 72 définit une voie en U formant un retour, et est destiné à être placé entre deux modules (non représentés) situés de par et d'autre de la ligne que définit l'installation. Ce module 72 comprend un fond ou plancher 74 destiné, lui aussi, à être placé horizontalement ou sensiblement horizontalement. Une palette peut ainsi se déplacer suivant un parcours en U, comme représenté par les flèches.

Le module 72 comprend une courroie d'entraînement sans fin 76 qui s'enroule autour d'une roue horizontale 78 de grand diamètre, et autour de deux poulies de renvoi 80. La roue et/ou l'une au moins des poulies est entraînée en rotation par un moteur approprié (non représenté). La courroie 76 est réalisée de manière analogue à la courroie 52 du module 46 décrit précédemment. Elle définit un brin d'entraînement curviligne 82 qui comprend une partie en forme d'arc de cercle (partie semi-circulaire) et deux tronçons parallèles entre eux. Ce brin d'entraînement 82 offre une face d'appui 84 (Figure 8) généralement plane et verticale, contre laquelle est destinée à venir en appui une partie d'entraînement de la palette.

Le module 72 comprend, en outre, un rail de guidage élastique 86 de forme curviligne et présentant une partie semi-circulaire et deux tronçons rectilignes, en sorte que le brin d'entraînement 82 et le rail de guidage 86 soient situés à une distance constante d. Le rail élastique est réalisé de manière analogue au rail décrit précédemment et possède de préférence une section rectangulaire. Il est engagé aussi dans une gorge en U (non représentée). Dans la position au repos, la distance d est inférieure au diamètre des roues libres 26 de la palette. Ainsi, deux des roues libres de la palette, situées proches d'un des flancs 18, se trouvent engagées entre le brin 82 et le rail de guidage 86. Il en résulte que la partie d'entraînement de la palette est constituée par une première région de chacune des roues libres, et que ces dernières possèdent aussi une seconde région, située à l'opposé de la première région, et venant en appui contre le rail de guidage curviligne 86.

Autrement dit, les deux roues libres décrites précédemment se trouvent prises en sandwich entre le brin d'entraînement 82 et le rail de guidage élastique 86.

Ainsi, dans le cas du module 72, les deux roues libres précédentes servent à la fois au guidage et à l'entraînement de la palette, le flanc 18 n'ayant ici aucune fonction dans l'entraînement.

Il en résulte que le brin d'entraînement 76 doit se situer plus près du plancher ou fond 74 du module 72 que le brin d'entraînement 50 par rapport au plancher ou fond 36 du module 46. Le passage d'une palette depuis un module à voie de circulation rectiligne vers un module à voie de circulation curviligne, ou inversement, s'effectue sans à-coups. Il est à noter que les courroies d'entraînement respectives des modules, qui sont animées par des moteurs séparés, peuvent donner à la palette des vitesses différentes. En particulier, on pourra donner à la palette une vitesse linéaire plus importante dans un module à voie de circulation rectiligne que dans un module à voie de circulation curviligne.

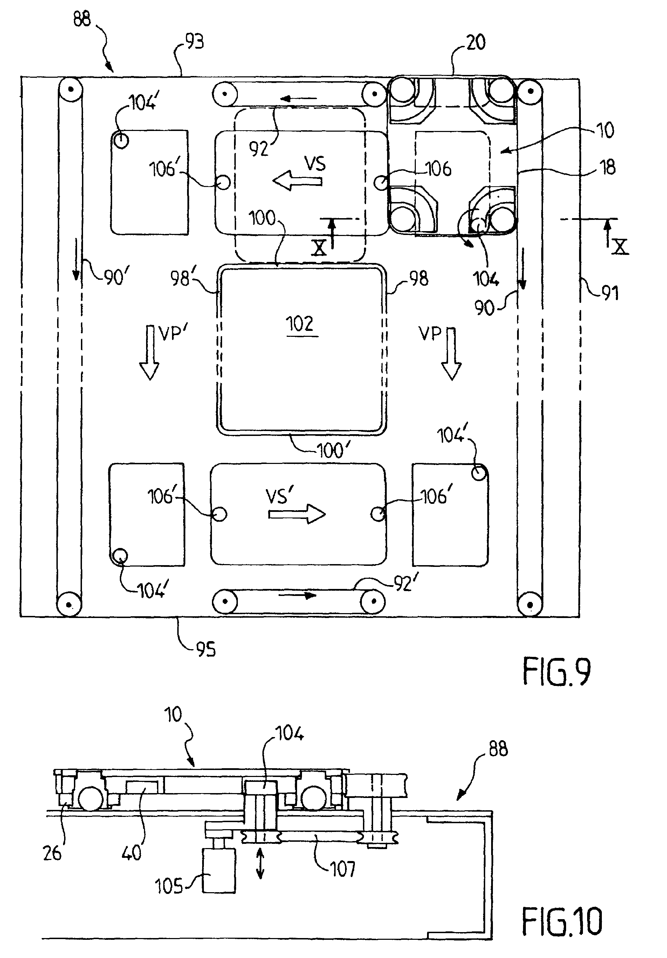

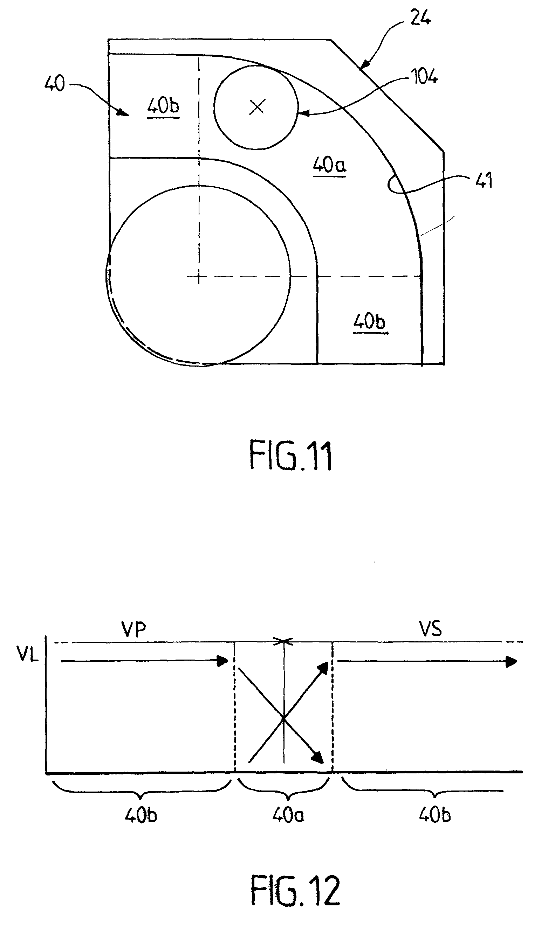

On se réfère maintenant aux Figures 9 et 10 qui montrent un module élémentaire 88 définissant une voie principale VP de circulation rectiligne, une voie secondaire VS de circulation rectiligne et une autre voie principale VP' de circulation rectiligne qui est parallèle à la voie VP. Cette dernière est suivie par une voie VS' qui est parallèle à la voie VS et rejoint à angle droit la voie VP.

La voie principale VP comporte un brin principal d'entraînement rectiligne 90, qui s'étend parallèlement à un bord externe 91 du module, tandis que la voie secondaire VS comprend un brin secondaire d'entraînement rectiligne 92, qui s'étend parallèlement à un bord d'entrée 93 du module, en sorte que les brins 90 et 92 s'étendent perpendiculairement entre eux. Ces brins font partie de deux courroies différentes entraînées avec la même vitesse linéaire, dans le sens indiqué par les flèches, de préférence par un même moteur (non représenté). Comme pour les modules décrits précédemment, chacune de ces courroies est à section plane et offre une face externe plane pour l'entraînement d'une palette.

On comprendra que les voies principale VP et secondaire VS définissent un embranchement à angle droit, et que la palette 10 est prévue pour soit se déplacer dans la direction de la voie principale VP, soit pour se déplacer dans la direction de la voie secondaire VS, en fonction des conditions souhaitées. La voie principale VP comprend un rail élastique de guidage 98 qui est disposé parallèlement au brin principal 90 et qui se raccorde perpendiculairement à un rail élastique de guidage 100 qui fait partie de la voie secondaire VS et qui s'étend parallèlement au brin secondaire 92.

Il en résulte que la palette peut se déplacer soit sur la voie principale VP par coopération avec le brin d'entraînement 90 et le rail de guidage 98, soit sur la voie secondaire VS par coopération avec le brin secondaire 92 et le rail de guidage 100, sans changement de l'orientation spatiale de la palette. Ainsi, pour l'entraînement sur la voie principale VP, c'est l'un des flancs 18 de la palette qui coopère avec le brin 90, tandis que pour l'entraînement sur la voie secondaire VS, c'est l'un des flancs 20 de la palette qui coopère avec le brin d'entraînement 92. Le rail 100 se raccorde à un rail élastique de guidage 98' qui est parallèle au rail 98 et qui se raccorde aussi à un rail élastique de guidage 100' parallèle au rail 100. Ces quatre rails ont de préférence une section rectangulaire et ils entourent un cadre central 102 de forme rectangulaire et contribuent ainsi à définir les voies VP, VP', VS et VS'. La voie VP' comprend un brin d'entraînement 90' parallèle au brin d'entraînement 90 et la voie VS'comprend un brin d'entraînement 92' parallèle au brin d'entraînement 92.

Pour permettre à la palette qui arrive sur le module 88 d'être aiguillée au choix sur la voie principale VP ou sur la voie secondaire VS, le module est équipé d'un galet de déviation 104 d'axe vertical qui est déplaçable verticalement, sous l'action d'un vérin 105 (Figure 5), entre une position basse, en laquelle le galet est éclipsé dans le fond du module, et une position haute, en laquelle le galet fait saillie au-dessus du fond du module.

Dans la position basse, le galet de déviation est inactif, si bien que la palette est aiguillée dans la direction de la voie principale VP.

Par contre, lorsque le galet 104 est en position haute, il vient s'engager dans une des rainures courbes 40 de la palette (voir Figures 1 et 2), en sorte que la palette quitte la voie principale VP, en échappant au contact du brin principal 90, pour s'engager dans la voie secondaire VS et venir au contact du brin secondaire 92, sans modification de l'orientation spatiale de la palette. Dans l'exemple le galet 104 est motorisé, mais ceci n'est pas obligatoire. Le galet est entraîné en rotation par l'intermédiaire d'une courroie 107 dans le sens de la flèche (Figure 9) et il possède une vitesse périphérique égale à la vitesse du brin principal 90 et donc à celle du brin secondaire 92, pour permettre une transition des mouvements de déplacement perpendiculaires comme on le verra plus loin.

Le galet de déviation 104 est accompagné d'un organe 106 destiné à faciliter le mouvement de la palette en ligne droite, c'est à dire le long de la voie principale VP, lorsque le galet de déviation est dans sa position basse. L'organe 106 est ici constitué d'un autre galet qui est monté fou autour d'un axe vertical et qui est lui aussi déplaçable verticalement entre une position basse et une position haute, mais en alternat avec le galet de déviation 104. Lorsque le galet de déviation 104 est en position haute pour aiguiller la palette vers la voie secondaire VS, le galet 106 est en position basse et, inversement, lorsque le galet de déviation 104 est en position basse, le galet 106 est ériger en position haute pour faciliter le mouvement de la palette sur la voie principale VP.

On a représenté en traits interrompus, sur la Figure 9, la position de la palette une fois engagée sur la voie secondaire VS. La palette poursuit alors son chemin sur les voies VP' et VS' en tournant à chaque fois à angle droit à l'embranchement des voies VS et VP' puis à celui des voies VP' et VS' et enfin à celui des voies VS' et VP, sans modification de son orientation spatiale. Des galets analogues aux galets 104 et 106 sont prévus au niveau de chaque embranchement.

La voie VP', parallèle à la voie principale VP, est ouverte du côté du bord d'entrée 93 ainsi que sur le bord 95 situé du côté opposé du module. Il en résulte que lorsque des modules élémentaires 88 sont situés d'un même côté de la ligne de l'installation, la palette peut passer directement d'un module à l'autre en ligne droite. Des galets 104' et 106', analogues aux galets 104 et 106, situés aux autres embranchements du module pour fonction d'aiguiller la palette pour qu'elle tourne à angle droit ou pour qu'elle continue en ligne droite, comme cela été décrit plus haut.

On se réfère maintenant à la figure 11 pour décrire la forme d'une rainure de guidage 40 aménagée dans un bloc 24 d'une palette. Cette rainure comprend une partie centrale courbe 40a en quart de cercle qui se prolonge par deux parties extrêmes rectilignes 40b qui sont perpendiculaires entre elles et parallèles respectivement à des bords de la palette. Le galet de déviation 104, quand il est érigé en position haute, vient rouler contre une face extérieure 41 de la rainure de guidage, c'est à dire contre celle qui correspond au plus grand rayon de la partie en quart de cercle.

Ainsi, lors du changement de direction de la palette, l'appui du galet 104 sur la face extérieure 41 de la rainure permet une transmission de mouvement ainsi qu'un passage fluide de l'angle. La distance parcourue par le galet 104 étant plus grande, ceci provoque un ralentissement de la palette. Pendant le changement de direction de la palette (passage de la voie VP à la voie VS), les brins d'entraînement 90 et 92 restent à vitesse constante, alors que la palette ralentit puis accélère, ce qui permet une transition de mouvement sans heurts.

Le graphe de la figure 12 illustre les variations de la vitesse linéaire VL de la palette en fonction de la position du galet de déviation 104 le long de la rainure de guidage 40. Lorsque le galet se déplace dans une partie d'extrémité 40b, la vitesse VL est constante. Ensuite, lorsque le galet se déplace dans la partie centrale 40a, la vitesse VL diminue pour augmenter à nouveau. Enfin lorsque le galet se trouve dans l'autre partie d'extrémité 40b, la vitesse est à nouveau constante et reprend la même valeur que précédemment.

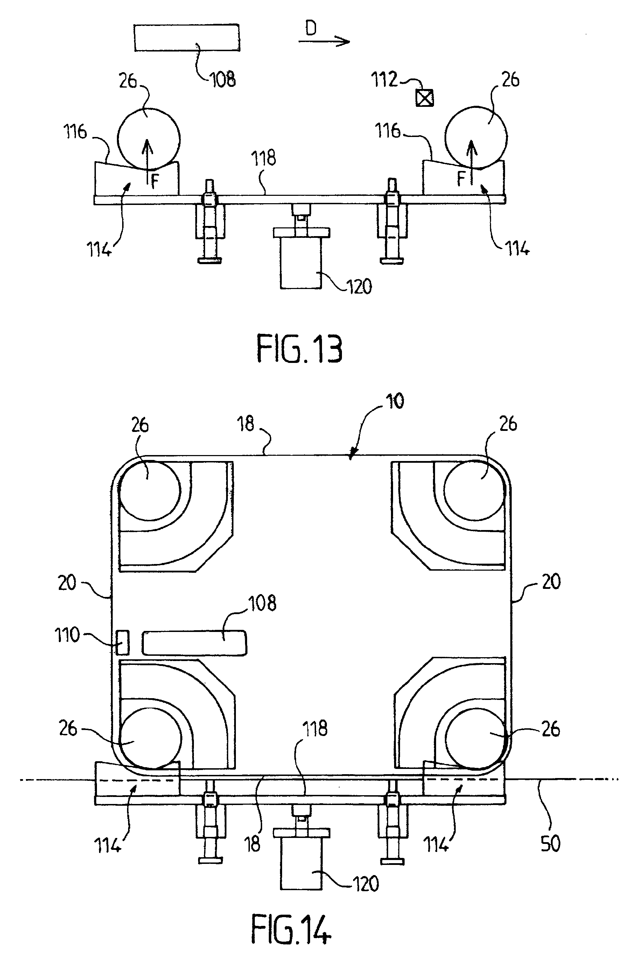

On se réfère maintenant aux Figures 13 et 14 pour décrire des moyens d'indexation propres à immobiliser la palette. De tels moyens d'indexation sont prévus pour équiper un module ayant une voie de circulation de forme choisie, en particulier une forme rectiligne.

Ces moyens d'indexation sont propres à immobiliser la palette 10 en un emplacement choisi de la voie de circulation, et cela sans qu'il soit nécessaire de modifier la vitesse du brin d'entraînement 50.

Les moyens d'indexation comprennent un amortisseur 108 monté escamotable sous l'action d'un vérin (non représenté) et propre à faire saillie à partir du fond du module pour coopérer avec une butée 110 prévue sous la face inférieure de la palette (Figure 14). Cet amortisseur est relevé en position haute sous l'action d'un capteur 112 (par exemple de type inductif), qui détecte la présence d'une roue libre 26 de la palette (Figure 13), ce qui permet de coopérer avec la butée 110 pour arrêter la palette lors de son déplacement.

En même temps le capteur 112 actionne deux poussoirs 114 susceptibles d'exercer une force latérale F sur deux roues libres 26 de la palette, du côté opposé au brin d'entraînement 50, pour provoquer le dégagement de la partie d'entraînement de la palette d'avec le brin d'entraînement et arrêter ainsi la palette dans son déplacement. De préférence la vitesse linéaire du brin 50 n'est pas modifiée.

Les poussoirs 114 ont chacun une rampe 116 en forme de V, ici un V dissymétrique, pour assurer le centrage de la roue libre correspondante 26. Les poussoirs 114 sont portés par un support commun 118 actionné par un vérin 120, de préférence du type pneumatique. Ainsi, lorsque le vérin est actionné, à partir de la butée 108, la rampe 116 des poussoirs chasse latéralement les deux roues libres de la palette et permet à cette dernière de terminer sa course et de se positionner à l'endroit désiré, par l'effet de centrage de la forme en V des rampes. Pendant que la palette est immobilisée, le brin d'entraînement 50 continue à tourner. Pendant cette immobilisation, il est possible d'effectuer une opération, par exemple d'assemblage ou d'usinage, sur une ou plusieurs pièces que porte la palette. Une fois cette opération effectuée, il suffit de déplacer les poussoirs en sens inverse et d'escamoter la butée pour libérer la palette, sous l'effet de la bande de rappel élastique, de sorte qu'elle poursuive son mouvement par la coopération du brin d'entraînement 50.

Il est à noter que la présence de l'amortisseur et de la butée, bien que facultative, contribue à un meilleur indexage de la palette en conjonction avec les deux poussoirs.

L'installation de l'invention permet ainsi de faire circuler des palettes dans des conditions de fonctionnement et de sécurité optimales, même avec des vitesses très élevées. Elle autorise également des variations de vitesse d'un module à l'autre, avec immobilisation des palettes en des endroits choisis des modules. Dans un même module, ces variations de vitesse peuvent être obtenues avec des vitesses linéaires constantes pour les organes d'entraînement (courroies et galets) qui sont au contact de la palette, sans glissement; de même, on peut prévoir que tous les moteurs d'entraînement tournent à la même vitesse dans un même module.

Par exemple, les différents galets d'entraînement venant au contact de la palette ont le même diamètre. L'arrêt d'une palette s'effectue par interruption de la friction sur la courroie. On évite ainsi les latences inhérentes aux systèmes à vitesse variable. Cependant, les vitesses peuvent être différentes dans les différents modules d'une installation.

## Revendications

1. Installation pour la circulation de palettes porte-pièces de forme générale rectangulaire se déplaçant dans des modules élémentaires sous l'action de frottement d'au moins un brin d'entraînement, le déplacement des palettes s'effectuant par l'intermédiaire de moyens de roulement équipant la palette et roulant sur les fonds respectifs des modules,
**caractérisée en ce que** la palette (10) comprend un corps (12) sous lequel sont montées des roues libres (26) disposées horizontalement pour assurer le guidage et/ou l'entraînement de la palette, **en ce que** chaque module (46 ; 72 ; 88) comprend au moins un rail de guidage (62 ; 86 ; 98, 102) définissant une voie de circulation de forme choisie et réalisé en un matériau élastiquement déformable, et **en ce que**, pendant le déplacement de la palette sur un module, le rail de guidage (62 ; 86 ; 98, 102) exerce une force de rappel élastique sur au moins une roue libre (26) de la palette de manière à solliciter au moins une partie d'entraînement (18 ; 20 ; 26) de la palette en appui élastique contre le brin d'entraînement (50 ; 82 ; 90, 92) du module.

2. Installation selon la revendication 1, **caractérisée en ce que** les roues libres (26) sont réalisées chacune sous la forme d'une couronne montée sur roulement, en particulier sur roulement à billes, et à l'intérieur de laquelle est logé un des moyens de roulement (32).

3. Installation selon l'une des revendications 1 et 2, **caractérisée en ce que** les roues libres (26) comprennent chacune une surface cylindrique d'appui (38).

4. Installation selon l'une des revendications 1 à 3, **caractérisée en ce que** les roues libres (26) sont portées chacune par un bloc (24) disposé sous le corps (12) de la palette (10).

5. Installation selon l'une des revendications 1 à 4, **caractérisée en ce que** la palette (10) comprend quatre roues libres (26) situées respectivement dans la région des quatre coins (22) de la palette et quatre moyens de roulement associés (32).

6. Installation selon l'une des revendications 1 à 5, **caractérisée en ce que** les moyens de roulement de la palette comprennent des galets auto-directeurs (32).

7. Installation selon l'une des revendications 1 à 6, **caractérisée en ce que** le brin d'entraînement (50 ; 82 ; 90, 92) du module comprend une face d'appui (60 ; 84) généralement plane et verticale contre laquelle la partie de frotte ment de la palette est propre à venir en appui élastique.

8. Installation selon l'une des revendications 1 à 7, **caractérisée en ce que** le brin d'entraînement (50 ; 82 ; 90, 92) du module fait partie d'une courroie motrice sans fin.

9. Installation selon l'une des revendications 1 à 8, **caractérisée en ce que** le rail de guidage élastique (62 ; 86; 98, 102) est réalisé dans un matériau élastique propre à fournir un rappel élastique de valeur choisie.

10. Installation selon la revendication 9, **caractérisée en ce que** le matériau élastique est un polyuréthanne ou un caoutchouc.

11. Installation selon l'une des revendications 1 à 10, **caractérisée en ce que** le rail de guidage élastique (62 ; 86; 98, 102) est une bande amovible engagée en force dans une gorge en U (64) que comporte le module et dont l'ouverture s'ouvre sensiblement dans la direction horizontale vers les roues libres (26) de la palette (10).

12. Installation selon la revendication 11, **caractérisée en ce que** la bande amovible possède une section transversale de forme générale rectangulaire.

13. Installation selon l'une des revendications 1 à 12, **caractérisée en ce que** le module élémentaire (46) définit une voie de circulation rectiligne et comprend un brin d'entraînement rectiligne (50) et un rail de guidage rectiligne (62) parallèles entre eux, **en ce que** la partie d'entraînement de la palette est constituée par un flanc (18; 20) de la palette, et **en ce que** la ou les roues libres (26) de la palette en appui contre le rail de guidage rectiligne est (sont) située(s) à proximité d'un flanc opposé (18 ; 20) de la palette.

14. Installation selon l'une des revendications 1 à 12, **caractérisée en ce que** le module élémentaire (72) définit une voie de circulation curviligne et comprend un brin curviligne 82) et un rail de guidage curviligne (86) disposés à distance constante, **en ce que** la partie d'entraînement de la palette est constituée par une première région d'au moins une roue libre (26) de la palette qui possède une seconde région située à l'opposé de la première région et venant en appui contre le rail de guidage en arc de cercle (86).

15. Installation selon l'une des revendications 1 à 12, **caractérisée en ce que** le module élémentaire (88) définit une voie principale de circulation rectiligne (VP) ayant un brin principal d'entraînement rectiligne (90), une voie secondaire de circulation rectiligne (VS) ayant un brin secondaire d'entraînement rectiligne (92), les dites voie principale et voie secondaire formant un embranchement à angle droit, et **en ce que** le module est équipé d'un galet de déviation (104) d'axe vertical, qui est déplaçable verticalement entre une position basse en laquelle il s'éclipse dans le fond du module pour que la palette se déplace suivant la voie principale (VP) et une position haute en laquelle il fait saillie au dessus du fond du module pour s'engager dans une rainure courbe de guidage (40) aménagée dans l'un des coins de la palette en sorte que la palette quitte la voie princi pale de circulation (VP) en échappant au contact du brin principal d'entraînement (90) pour s'engager dans la voie secondaire de circulation et venir au contact du brin secondaire d'entraînement (92), sans modification de l'orientation spatiale de la palette.

16. Installation selon la revendication 15, **caractérisée en ce que** le module élémentaire (88) comprend une voie (VP') parallèle à la voie principale (VP) qui est ouverte du côté du bord d'entrée (93) du module ainsi que sur le bord (95) situé du côté opposé du module, de telle façon que, lorsque des modules élémentaires (88) sont situés côte à côte d'un même côté de la ligne de l'installation, la palette peut passer directement d'un module à l'autre en ligne droite.

17. Installation selon l'une des revendications 15 et 16, **caractérisée en ce que** la palette comprend quatre rainures courbes de guidage (40) aménagées respectivement dans les quatre angles.

18. Installation selon la revendication 17, prise en combinaison avec la revendication 4, **caractérisée en ce que** les rainures courbes de guidage (40) sont aménagées respectivement dans les blocs (24) de la palette.

19. Installation selon l'une des revendications 15 à 18, **caractérisée en ce que** chacune des rainures de guidage (40) comprend une partie centrale (40a) en quart de cercla prolongée par deux parties extrêmes rectilignes(40b).

20. Installation selon l'une des revendications 15 à 19, **caractérisée en ce que** le galet de déviation (104) est motorisé de manière à avoir une vitesse périphérique égale à celle du brin principal d'entraînement (90) et celle du brin secondaire d'entraînement (92).

21. Installation selon l'une des revendications 15 à 20, **caractérisée en ce que** le galet de déviation (104) est accompagné d'un autre organe (106) facilitant le mouvement en ligne droite dans la voie principale (VP), par exemple un autre galet pouvant être ériger en alternat avec le galet de déviation.

22. Installation selon l'une des revendications 1 à 21, **caractérisée en ce qu'**elle comprend des moyens d'indexation propres à immobiliser la palette (10) en un emplacement choisi de la voie de circulation, ces moyens comprenant deux poussoirs (114) propres à être actionnés par un capteur (112) pour exercer une force latérale sur deux roues libres (26) de la palette, du côté opposé au brin d'entraînement (50), provoquer le dégagement de la partie d'entraînement de la palette d'avec le brin d'entraînement, de préférence sans modifier la vitesse linéaire de ce dernier, et arrêter ainsi la palette dans son déplacement.

23. Installation selon la revendication 22, **caractérisée en ce que** les poussoirs (114) ont chacun une rampe (116) en forme de V propre à assurer le centrage de la roue libre correspondante (26).

24. Installation selon l'une des revendications 22 et 23, **caractérisée en ce que** les poussoirs (114) sont actionnés par un vérin déplaçable en translation sensiblement horizontale dans une direction perpendiculaire au déplacement de la palette.

25. Installation selon l'une des revendications 22 à 24, **caractérisée en ce que** les moyens d'indexation comprennent en outre un amortisseur escamotable (108) propre à être actionné avec les poussoirs (114) pour coopérer avec une butée (110) de la palette.

26. Palette propre à faire partie d'une installation selon l'une des revendications 1 à 25.
